# EUROPÄISCHE PATENTSCHRIFT

(11) **EP 0 448 062 B1**
(45) Veröffentlichungstag und Bekanntmachung des Hinweises auf die Patenterteilung: **16.02.1994**
(21) Anmeldenummer: 91104286.9
(22) Anmeldetag: 20.03.1991
(51) Int. Cl.: G01P 13/04

(54) **Drehrichtung erkennender Drehzahlgeber**
Direction sensing tachometer
Tachomètre qui reconnait la direction de rotation

(30) Priorität: 21.03.1990 DE 4009018
(43) Veröffentlichungstag der Anmeldung: 25.09.1991
(73) Patentinhaber: Mannesmann Kienzle GmbH (HR B1220), 78052 Villingen-Schwenningen (DE)
(72) Erfinder: Pfeiffer, Detlef, Ing. (grad.), W-7730 Villingen-Schwenningen (DE); Schultze, Hartmut, Ing. (grad.), W-7730 Villingen-Schwenningen (DE); Plankenhorn, Horst, Dipl.-Ing. (FH), W-7474 Bitz (DE); Werner, Thomas, Dipl.-Ing., W-7823 Bonndorf i. Schwarzwald (DE)

(56) Entgegenhaltungen:
- EP-A- 0 273 481
- DE-A- 3 041 041
- DE-A- 3 111 862
- DE-A- 3 620 884

## Beschreibung

Die Erfindung betrifft einen die Drehrichtung erkennenden Drehzahlgeber mit wenigstens einem Permanentmagneten und mehreren, vorzugsweise in ein und derselben Ebene angeordneten, magnetfeldabhängigen Elementen, welcher mit einem mit dem Meßobjekt verbundenen, ferromagnetischen Taktrad in Wirkverbindung steht und welcher in bezug auf die Bewegungsrichtungen des Taktrades am Einbauort eine lageunabhängige Montage gestattet.

Bekanntlich erfordert die gattungsgemäße Drehrichtungserkennung im Prinzip zwei in Bewegungsrichtung eines abzutastenden Zahnrades oder einer Taktscheibe hintereinander angeordnete, magnetfeldabhängige Elemente, welche beim Vorbeiziehen eines Zahnes nacheinander einer erhöhten an- und abschwellenden magnetischen Induktion ausgesetzt sind und je nach Drehrichtung Signale entgegengesetzter Phasenlage liefern. Am Ausgang eines Schmitt-Triggers, dem die in geeigneter Weise verstärkten Signale zugeführt werden, stehen dann je nach Drehrichtung entweder negative oder positive Rechteckimpulse an. Vorzugsweise werden die magnetfeldabhängigen Elemente in Form eines Differentialgebers gegeneinander geschaltet, um die Wirkungen des magnetischen Gleichfeldes und temperaturbedingte Störspannungen zu kompensieren. Ein die Drehrichtung erkennender Drehzahlgeber ist aus DE-A-3 620 884 bekannt.

Bei den üblichen Drehzahlgebern, die durch Abtasten beispielsweise von Zahnrädern oder Taktscheiben lediglich den Drehwert liefern, nicht aber den Drehsinn erkennen, ist es im allgemeinen erforderlich, den betreffenden Drehzanlgeber an einem Lager- oder Getriebegehäuse zu befestigen, um den Meßwert nach außen führen zu können. Dabei sind den Einbau- und den Abtastverhältnissen entsprechend für derartige Geber mehr oder weniger stabförmige Gehäusearchitekturen mit abhängig vom Meßprinzip stirnseitig angeordneten Induktionsspulen, Hallgeneratoren oder magnetoresistiven Elementen üblich. Die Befestigung der Geber an den betreffenden Getriebegehäusen erfolgt im allgemeinen mittels flüssigkeitsdicht ausgeführter Schraubverbindungen, aber auch mittels Einpreß- und Klebeverbindungen.

Die Einbaulage in bezug auf die Achse der Geber ist in diesen Fällen unkritisch. Bei Gebern, die zusätzlich eine Information über die Drehrichtung liefern sollen, muß, um ein Signal mit maximaler Dauer zu erzielen, eine optimale Lage der beiden hintereinander liegenden, magnetfeldabhängigen Elemente zur Drehrichtung des taktgebenden Rades angestrebt werden, zumal die Signalamplitude bei seriengerechter Fertigung solcher Geber sich im Bereich von wenigen mV bewegt, d. h. es ist bei der Montage des Gebers Justierung erforderlich, oder es müssen Vorkehrungen getroffen sein, die eine eindeutige Einbaulage des Gebers garantieren. Beides ist aufwendig und nicht seriengerecht. Außerdem wäre die Austauschbarkeit mit einem lediglich die Drehzahl erkennenden Geber nicht möglich. In vielen Einbausituationen ist der Einbau von Gebern außerdem dadurch erschwert, daß sie in Winkeln und Nischen beispielsweise eines Getriebegehäuses angeordnet werden müssen, so daß eine auch im Hinblick auf das Ansetzen von Werkzeugen möglichst unkomplizierte Montage gefordert ist.

Die somit sich ergebende technische Aufgabe ist darin zu sehen, einen die Drehrichtung erkennenden Drehzahlgeber zu schaffen, welcher unter Beibehaltung herkömmlicher Gehäusearchitekturen und üblicher Montageweisen bezüglich der Signalbildung eine weitgehende Lageunabhängigkeit bei der Montage am Einbauort gestattet.

Die Lösung dieser Aufgabe sieht vor, daß in einer Eingangsschaltung zwei mit einer Verstärkerstufe verknüpften, magnetfeldabhängigen Elementen wenigstens zwei weitere, mit einer zweiten Verstärkerstufe verknüpfte, magnetfeldabhängige Elemente derart zugeordnet sind, daß sich die kürzesten Verbindungslinien zwischen zwei mit ein und derselben Verstärkerstufe verknüpften, magnetfeldabhängigen Elementen kreuzen, daß die Ausgänge der Verstärkerstufen über Formerstufen mit einer Ausgangsschaltung und mit einer Auswahlschaltung, bestehend aus einem Komparator und einem von diesem gesteuerten Speicher verknüpft sind und daß der nach dem Einbau des Drehzahlgebers sich aufgrund der Auswahlfunktion des Komparators ergebende Zustand des Speichers die Ausgangsschaltung des Drehzahlgebers für das jeweils "bessere" Signal der beiden Paare magnetfeldabhängiger Elemente öffnet.

Ein bevorzugtes Ausführungsbeispiel ist dadurch gekennzeichnet, daß als magnetfeldabhängige Elemente Hallgeneratoren Anwendung finden, daß jeweils zwei Hallgeneratoren als Differentialgenerator geschaltet sind und daß jeder Differentialgenerator mit einem Operationsverstärker als Differenzverstärker verbunden ist.

Das bevorzugte Ausführungsbeispiel sieht außerdem vor, daß dem Speicher eine Überwachungsschaltung zugeordnet ist, welche bei einer Änderung des Pegelwertes an einem Ausgang des Speichers die durch den Schaltvorgang des Komparators erfolgte Verriegelung der Speichereingänge aufhebt.

Die nicht zitierten abhängigen Patentansprüche beschreiben weitere vorteilhafte Ausbildungen der Erfindung.

Die Erfindung bietet den Vorteil, daß sie die gestellte Aufgabe mit dem geringstmöglichen Aufwand löst. Vorteilhaft ist ferner, daß die bisherige, für Geber, die Drehrichtungen nicht erkennen können, übliche Gehäusearchitektur sowie deren Montageweise beibehalten werden kann und somit Geber ohne Drehrichtungserkennung gegen Geber mit Drehrichtungserkennung ohne weiteres ausgetauscht werden können. Eine an sich erforderliche Justierung erfolgt erfindungsgemäß automatisch. Auch ist bei der gefundenen Lösung eine beliebige Lage der Hallgeneratoren bzw. des die Hallgeneratoren tragenden Substratplättchens innerhalb des Gebergehäuses möglich. Die gegebene Rotationssymmetrie gestattet eine problemlose Montage des Drehzahlgebers als solchen und eine Vereinfachung bei der Teilefertigung, d. h. die Erfindung bietet alle Voraussetzungen für eine Serienfertigung.

Im folgenden sei ein Ausführungsbeispiel der Erfindung näher erläutert. Es zeigen:
FIGUR 1 eine Ansicht eines einbaufertigen Drehzahlgebers mit einem diesem zugeordneten, ferromagnetischen Taktrad,
FIGUR 2 eine schematische Darstellung von erfindungsgemäß einander zugeordneten Hallgeneratoren in optimaler Lage zu den möglichen Bewegungsrichtungen der Stege des Taktrades sowie Diagramme der daraus resultierenden Signalspannungen,
FIGUR 3 eine schematische Darstellung gemäß FIGUR 2, bei der keine Verbindungslinie zweier miteinander verknüpfter Hallgeneratoren mit der Bewegungsrichtung der Stege des Taktrades zusammenfällt,
FIGUR 4 ein Blockschaltbild der Signalverarbeitung des Drehzahlgebers,
FIGUR 5 ein aufgelöstes Schaltbild der Signalverarbeitung des Drehzahlgebers,
FIGUR 6 eine Teilschnittdarstellung des Drehzahlgebers im Meßkopfbereich und
FIGUR 7 ein Schaltungsbeispiel für eine mittelbare Verknüpfung zweier, einander zugeordneter Hallgeneratoren.

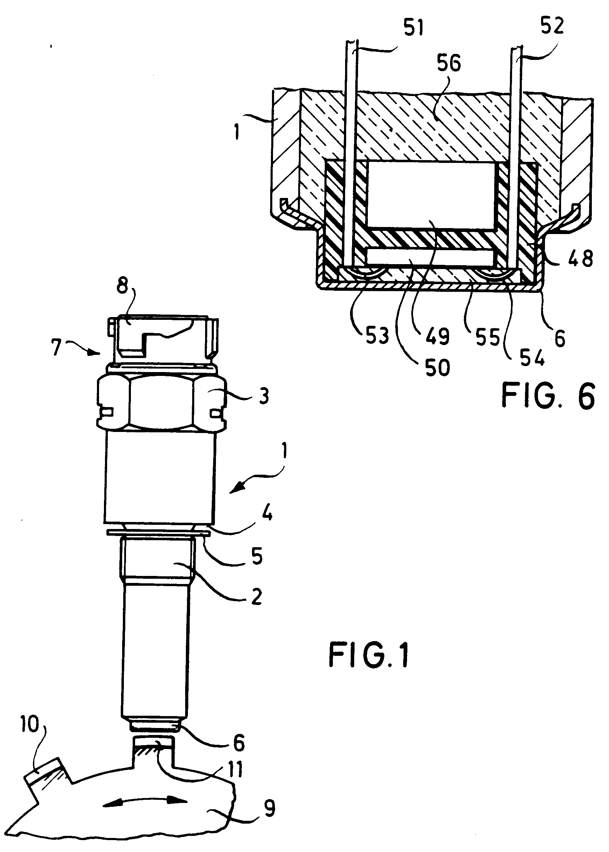

Wie FIGUR 1 zeigt, weist der montagefertige Drehzahlgeber gemäß der Erfindung ein hülsenförmiges, als Schraubstutzen ausgebildetes Gebergehäuse 1 auf, an dem ein Gewinde 2 und ein Sechskant 3 für das Ansetzen eines Montagewerkzeuges, beispielsweise eines Steckschlüssels, ausgebildet sind, um den Drehzahlgeber beispielsweise am Getriebegehäuse eines Kraftfahrzeuges zu befestigen. Eine Ringschulter 4 ist beim Befestigen des Drehzahlgebers unter Zwischenlage einer unverlierbar montierten Scheibe 5 als Begrenzungsanschlag wirksam. Meßkopfseitig ist das Gebergehäuse 1 mittels einer magnetisch nicht leitenden Schutzkappe 6 abgeschlossen. An der Gegenseite ist ein Steckersockel 7 befestigt, an welchem Renkanschlußmittel 8 angeformt sind. Diese sind einer mit dem anzuschließenden Stecker zusammenwirkenden, nicht dargestellten Überwurfmutter zugeordnet. Bei dem dargestellten Ausführungsbeispiel ist dem Drehzahlgeber getriebeseitig als Taktrad eine ferromagnetische Taktscheibe 9 zugeordnet, an der mit dem Meßkopf des Drehzahlgebers zusammenwirkende Stege - zwei sind mit 10 und 11 bezeichnet - angewinkelt ausgebildet sind.

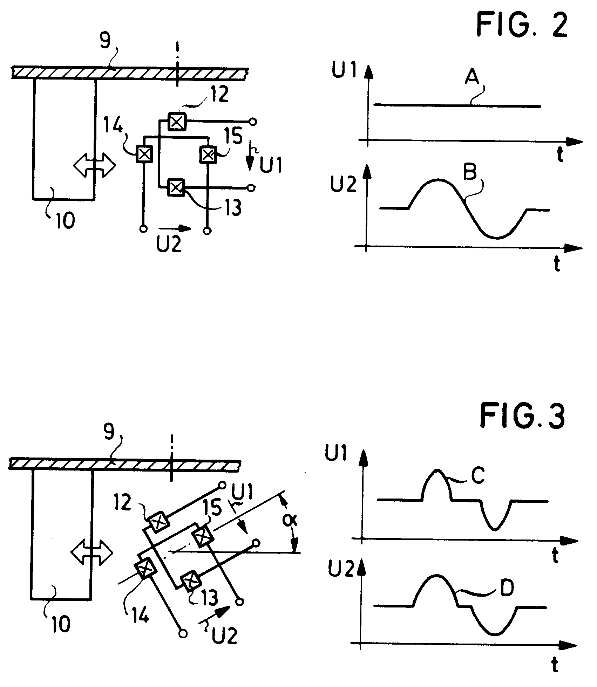

Gemäß FIGUR 2 sind als magnetfeldabhängige Elemente vier Hallgeneratoren 12, 13, 14, 15 vorgesehen, von denen jeweils zwei zur Kompensation von Störspannungen gegeneinander, d. h. als Differentialgenerator, geschaltet sind. Die Hallgeneratoren 12, 13, 14, 15 sind im wesentlichen in ein und derselben Ebene unmittelbar oder in geringem Abstand zur Schutzkappe 6 im Meßkopf des Drehzahlgebers angeordnet.

Wie aus FIGUR 2 ferner ersichtlich ist, ist die Anordnung der Differentialgeneratoren 12, 13 und 14, 15 derart getroffen, daß sich die gedachten kürzesten Verbindungslinien zwischen zwei miteinander gekoppelten Hallgeneratoren kreuzen. Bei der optimalen Einbaulage des Drehzahlgebers, wie sie die FIGUR 2 zeigt, sind die gedachten Verbindungslinien des einen Differentialgenerators 14, 15 und die möglichen Bewegungsrichtungen (Doppelpfeil) des am Meßkopf vorbeiziehenden Steges 10 der Taktscheibe 9 gleichgerichtet. Dies hat zur Folge, daß das Signal U2 des Differentialgenerators 14, 15 eine maximale Dauer aufweist und im wesentlichen sinusförmig verläuft (Diagramm B), während das Signal U1 des Differentialgenerators 12, 13 Null ist (Diagramm A).

Die FIGUR 3 zeigt eine Einbaulage, bei der keine der gedachten kürzesten Verbindungslinien zwischen den Differentialgeneratoren 12, 13 und 14, 15 mit den Bewegungsrichtungen (Doppelpfeil) des Steges 10 der Taktscheibe 9 zusammenfällt. Die Bewegungsrichtungen des Steges 10 stehen zu dem am günstigsten liegenden Hallgeneratorenpaar 14, 15 unter einem Winkel α . Die resultierenden Signale U1 und U2 der beiden Differentialgeneratoren 12, 13 und 14, 15 weisen, wie die zugeordneten Diagramme C und D zeigen, eine verstümmelte Sinusform auf und sind auch im Vergleich mit der bei optimaler Einbaulage sich ergebenden, maximalen Signaldauer von unterschiedlich langer Dauer.

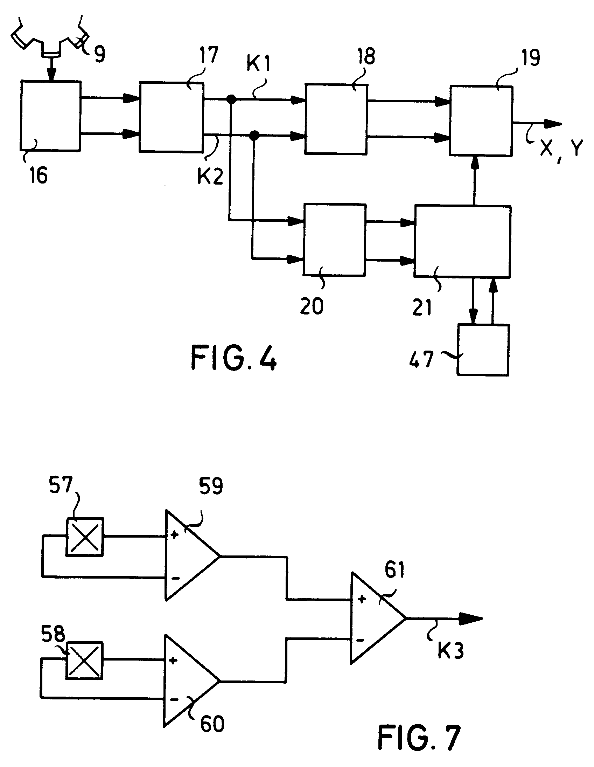

Das Blockschaltbild FIGUR 4 zeigt die prinzipielle Signalverarbeitung mit dem Ziel, nach dem Einbau des Drehzahlgebers den jeweils "besseren" Differentialgenerator 12, 13 bzw. 14, 15, d.h. denjenigen, der die Signale mit der längsten Dauer liefert, auszuwählen, eine Speicherung dieser Auswahl vorzunehmen und für die Dauer des Anliegens der Versorgungsspannung nur den Signalkanal für eine Drehzahlmessung auf den Ausgang des Gebers durchzuschalten, auf dem das "bessere" Signal ansteht. In dem dargestellten Beispiel bilden die beiden Hallgeneratorenpaare 12, 13 und 14, 15 eine Eingangsschaltung 16, welcher Verstärkerstufen 17 nachgeschaltet sind. Am Ausgang der Verstärkerstufen 17 stehen die Signale der Eingangsschaltung 16 auf zwei Signalkanälen K1 und K2 an, die einerseits über Formerstufen 18 mit einer Ausgangsschaltung 19, andererseits über Formerstufen 20 mit einer Auswahlschaltung 21 verbunden sind. Die Auswahlschaltung 21, welcher eine Überwachungsschaltung 47 zugeordnet ist, steuert die Ausgangsschaltung 19 in der vorstehend angedeuteten Weise.

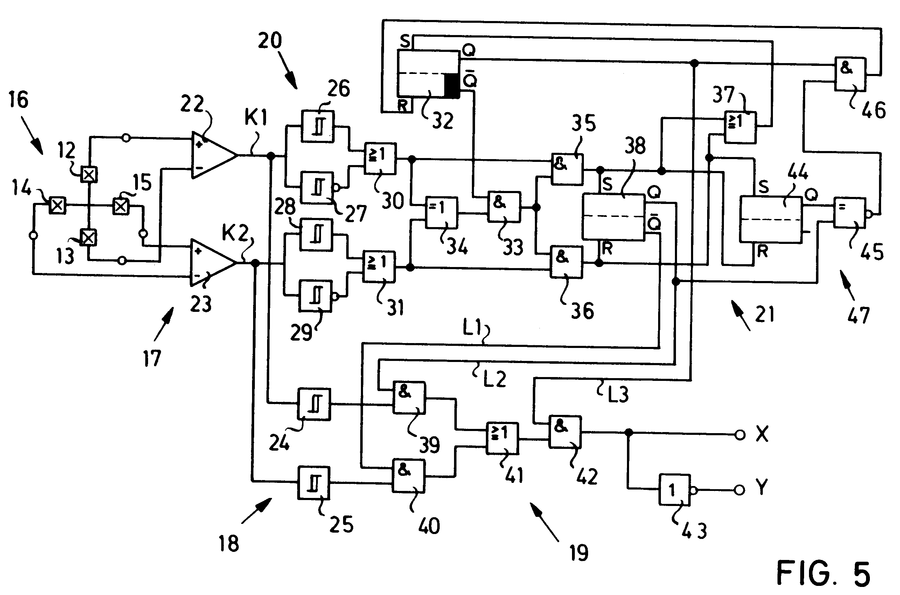

Im folgenden sei die Signalverarbeitung anhand des Schaltbildes FIGUR 5 näher erläutert.

Gemäß der FIGUR 5 sind den die Eingangsschaltung 16 bildenden Halldifferentialgeneratoren 12, 13 und 14, 15 als Verstärkerstufen jeweils ein Operationsverstärker 22 und 23 nachgeschaltet. Die mit den Ausgängen der Operationsverstärker verknüpften Formerstufen 18 und 20 bestehen aus Schmitt-Triggern mit unterschiedlichen Schaltschwellen. Die Schmitt-Trigger 24 und 25 der Formerstufen 18 liefern Rechteckimpulse, die aus der positiven und der negativen Phase des Gebersignals gebildet sind und somit eine Information über die Drehrichtung beinhalten. Die Schmitt-Trigger 26, 27, 28 und 29 der Formerstufen 20 liefern demgegenüber lediglich phasenbezogene Rechteckimpulse. Dabei wirken die Schmitt-Trigger 27 und 29 invertierend, so daß die jeweils mit einem ODER-Glied 30 bzw. 31 abschließenden Parallelschaltungen der Schmitt-Trigger 26, 27 und 28, 29 eine drehrichtungsunabhängige Gleichrichtung der Eingangssignale bewirken.

Die den Formerstufen 18 und 20 nachgeschaltete Auswerteschaltung 21 enthält eine Flip-Flop-Stufe 32 mit definierter Grundstellung, d. h. beim Anlegen der Versorgungsspannung an den Drehzahlgeber weist der Ausgang Q̅ der Flip-Flop-Stufe 32, der mit einem UND-Glied 33 verknüpft ist, den Pegelwert "1" auf. Das UND-Glied 33, an dessen zweitem Eingang der Ausgang eines Exklusiv-ODER-Gliedes 34, welches eingangsseitig mit den beiden Signalkanälen K1 und K2 bzw. den Ausgängen der Formerstufen 20 verknüpft ist, angeschlossen ist, ist ausgangsseitig mit jeweils einem UND-Glied 35 bzw. 36 verbunden. Mit den Ausgängen der UND-Glieder 35 und 36 ist ein ODER-Glied 37 verknüpft, das den Setzeingang S der Flip-Flop-Stufe 32 steuert. Außerdem ist mit den Ausgängen der UND-Gieder 35 und 36 eine weitere Flip-Flop-Stufe 38 derart parallel verknüpft, daß deren Setzeingang S mit dem Ausgang des UND-Gliedes 35 und deren Rücksetzeingang R mit dem Ausgang des UND-Gliedes 36 in Verbindung steht. Die Ausgänge Q und Q̅ der als Speicher für die Auswahl des Differentialgenerators mit der für die Signalbildung "besseren" Lage dienenden Flip-Flop-Stufe 38 sind über die Steuerleitungen L1 und L2 in der Ausgangsschaltung 19 mit jeweils einem jedem Signalkanal K1 bzw. K2 zugeordneten UND-Glied 39 bzw. 40 verknüpft. Den UND-Gliedern 39 und 40 ist ein ODER-Glied 41 nachgeschaltet, das seinerseits ausgangsseitig mit einem UND-Glied 42 verbunden ist, an dessen zweitem Eingang über die Steuerleitung L3 der zweite Ausgang Q der Flip-Flop-Stufe 32 anliegt. Der Ausgang des UND-Gliedes 42 führt zum Anschlußkontakt X des Drehzahlgebers. An einem weiteren Anschlußkontakt Y steht zum Zwecke der Signalübertragungskontrolle, gebildet durch das invertierende NICHT-Glied 43, ein zum Ausgang X gegenphasiges Signal an.

Wie aus der FIGUR 5 ferner ersichtlich ist, ist der Auswahlschaltung 21 zusätzlich eine Überwachungsschaltung zugeordnet. Diese besteht aus einer im Gegentakt zur Flip-Flop-Stufe 38 geschalteten Flip-Flop-Stufe 44 sowie einem nachgeschalteten, invertierenden Äquivalenzglied 45, dessen Ausgang über ein UND-Glied 46, dessen einer Eingang mit der Steuerleitung L3 vernüpft ist, mit dem Rücksetzeingang R der Flip-Flop-Stufe 32 verbunden ist.

Die Funktion der Auswahlschaltung 21 ist folgende: Wie bereits erwähnt, weist der Ausgang Q̅ der Flip-Flop-Stufe 32 beim Anschließen des Drehzahlgebers an die Versorgungsspannung einen Pegelwert "1" auf. Dadurch ist über das UND-Glied 33 die als Speicher wirkende Flip-Flop-Stufe 38 entriegelt, d. h. ein auf dem Signalkanal K1 oder dem Signalkanal K2 am Ausgang der ODER-Glieder 30 bzw. 31 zuerst anstehendes Signal bewirkt ein Durchschalten des Exklusiv-ODER-Gliedes 34 und einen Pegelwert "1" am Ausgang des UND-Gliedes 33. Je nachdem, welcher der Signallanäle K1 oder K2 das zuerst anstehende Signal führt, nimmt der Ausgang des UND-Gliedes 35 oder derjenige des UND-Gliedes 36 den Pegelwert "1" an. Dieser Spannungssprung setzt die Flip-Flop-Stufe 38 und legt über das beide Signalkanäle K1 und K2 verbindende ODER-Glied 37 ein Steuersignal an den Setzeingang S der Flip-Flop-Stufe 32. Dadurch nimmt der Ausgang Q̅ den Pegelwert "O" an und verriegelt über das UND-Glied 33 den Speicher, d. h. nachfolgende Signale bleiben in bezug auf die Flip-Flop-Stufe 38 wirkungslos. Für den Fall, daß gleichzeitig auf beiden Signalkanälen K1 und K2 ein Signal ansteht, sorgt die Antivalenzschaltung, das Exklusiv-ODER-Glied 34, dafür, daß eine Auswahl durch ein Setzen der Flip-Flop-Stufe 38 erst dann getroffen wird, wenn sich eine Zeitdifferenz zwischen den Signalen eingestellt hat bzw. das "schlechtere" Signal abgefallen ist.

Der gesetzte Speicher, d. h. die Flip-Flop-Stufe 38 liefert an einem der Ausgänge Q bzw. Q̅ einen Pegelwert "1" und öffnet damit das dem betreffenden Signalkanal K1 bzw. K2 zugeordnete UND-Glied 39 bzw. 40 in der Ausgangsschaltung 19. Die Drehzahlsignale können jedoch erst dann über das beide Signalkanäle K1 und K2 verbindende ODER-Glied 41 auf die Ausgangskontakte X und Y des Drehzahlgebers durchgreifen, wenn das zwischengeschaltete UND-Glied 42, welches mit dem Ausgang Q der Flip-Flop-Stufe 32 verbunden ist, durch einen den abgeschlossenen Speichervorgang quittierenden Pegelwert "1" auf der Steuerleitung L3 geöffnet ist.

Mit der der Auswahlschaltung 21 zugeordenten Überwachungsschaltung 47 werden beispielsweise die Q-Ausgänge der Flip-Flop-Stufe 38 und der gegensinnig geschalteten Flip-Flop-Stufe 44 fortlaufend auf ungleiche Pegelwerte überprüft. Bei durch irgendwelche Störungen verursachten Gleichheit wird über ein negierendes Äquivalenzglied 45 und ein UND-Glied 46 der Rücksetzeingang R der Flip-Flop-Stufe 32 angesteuert und über einen sich dadurch einstellenden Pegelwert "1" am Q̅-Ausgang der Flip-Flop-Stufe 32 die Verriegelung des Speichers 38 aufgehoben, so daß ein neuer Auswahl- und Speicherzyklus erfolgen kann.

Die Teilschnittdarstellung FIGUR 6 zeigt eine Ausführung des Drehzahlgebers im Meßkopfbereich, wobei ein Träger 48 vorgesehen ist, in dem einerseits ein Permanentmagnet 49, andererseits ein Substratplättchen 50 aufgenommen sind. Mit 51 und 52 sind zwei von mehreren im Träger 48 eingebetteten Leitern bezeichnet, die durch eine Bond-Verdrahtung 53, 54 mit dem Substratplättchen 50 kontaktiert sind. Die Verdrahtungsebene des Substratplättchens 50 ist mittels einer Vergußmasse 55 abgeschlossen. 56 stellt ebenfalls eine im Rückraum des Trägers 48 eingebrachte Vergußmasse dar.

Mit der FIGUR 7 ist ein Ausführungsbeispiel einer über Verstärkerstufen mittelbaren Verknüpfung zweier einzelner, für das Erkennen der Drehrichtung erforderlicher Hallgeneratoren 57 und 58 dargestellt. Diese Lösung eignet sich beispielsweise für eine Anwendung zusammen mit einem Ringmagneten, d. h. die Hallgeneratoren werden in dem quasi feldfreien Raum des Ringmagneten positioniert. Die durch das Restgleichfeld hervorgerufenen Hallspannungen sind in diesem Falle vernachlässigbar. Jedem der Hallgeneratoren 57 und 58 ist ein Operationsverstärker 59 und 60 nachgeschaltet; die Ausgänge der Operationsverstärker 59, 60 sind über einen weiteren Operationsverstärker 61 verknüpft. Letzterer gibt beim Überstreichen der Hallgeneratoren durch ein ferromagnetisches Element, und zwar in Richtung ihrer kürzesten Verbindungslinie, eine positive und eine negative Signalkette auf den weiterführenden Signalkanal K3.

Der Vollständigkeit halber sei noch erwähnt, daß die beschriebene Schaltung auch mit diskreten Bauelementen aufgebaut werden kann oder daß beispielsweise lediglich für die Hallgeneratoren ein integrierter Baustein Anwendung findet, während die Operationsverstärker und die logischen Funktionselemente insbesondere aus thermischen Gründen im Bereich der dem Meßkopf abgewandten Seite des Gebergehäuses angeordnet sind.

## Patentansprüche

1. Drehrichtung erkennender Drehzahlgeber mit wenigstens einem Permanentmagneten und mehreren, vorzugsweise in ein und derselben Ebene angeordneten, magnetfeldabhängigen Elementen, welcher mit einem mit dem Meßobjekt verbundenen, ferromagnetischen Taktrad in Wirkverbindung steht,
dadurch gekennzeichnet,
daß in einer Eingangsschaltung (16) zwei mit einer Verstärkerstufe verknüpften, magnetfeldabhängigen Elementen wenigstens zwei weitere, mit einer zweiten Verstärkerstufen verknüpfte, magnetfeldabhängige Elemente derart zugeordnet sind, daß sich die kürzesten Verbindungslinien zwischen jeweils zwei mit ein und derselben Verstärkerstufe verknüpften, magnetfeldabhängigen Elementen kreuzen,
daß die Ausgänge der Verstärkerstufen (17) über Formerstufen (18, 20) mit einer Ausgangsschaltung (19) und mit einer Auswahlschaltung (21), bestehend aus einem Komparator (32, 33, 34, 35, 36, 37) und einem von diesem gesteuerten Speicher (38) verknüpft sind und daß Ausgangs- und Auswahlschaltung so ausgebildet sind, daß der nach dem Einbau des Drehzahlgebers sich aufgrund der Auswahlfunktion des Komparators (32, 33, 34, 35, 36, 37) ergebende Zustand des Speichers (38) die Ausgangsschaltung (19) des Drehzahlgebers für das jeweils "bessere" Signal der beiden Paare magnetfeldabhängiger Elemente, d.h. zur Weitergabe des Signales des Paares mit längerer Signaldauer, öffnet, sodaß in bezug auf die Bewegungsrichtungen des Taktrades am Einbauort eine lageunabhängige Montage gestattet ist.

2. Drehzahlgeber nach Anspruch 1,
dadurch gekennzeichnet,
daß als magnetfeldabhängige Elemente Hallgeneratoren Anwendung finden,
daß jeweils zwei Hallgeneratoren (12, 13 bzw. 14, 15) als Differentialgenerator geschaltet sind und daß jeder Differentialgenerator (12, 13 bzw. 14, 15) mit einem Operationsverstärker (22, 23) als Differenzverstärker verbunden ist.

3. Drehzahlgeber nach Anspruch 1,
dadurch gekennzeichnet,
daß als Permanentmagnet ein Ringmagnet Anwendung findet und daß die magnetfeldabhängigen Elemente (12, 13, 14, 15) in dem innerhalb des Ringmagneten bestehenden Raum minimaler magnetischer Induktion angeordnet sind.

4. Drehzahlgeber nach Anspruch 1,
dadurch gekennzeichnet,
daß dem Speicher (38) eine Überwachungsschaltung (47) zugeordnet ist, welche bei einer Änderung des Pegelwertes an einem Ausgang des Speichers (38) die durch den Schaltvorgang des Komparators (32, 33, 34, 35, 36, 37) erfolgte Verriegelung der Speichereingänge aufhebt.

5. Drehzahlgeber nach Anspruch 1,
dadurch gekennzeichnet,
daß für die Formerstufen (18, 20) zwischen den Verstärkerstufen (17) und der Ausgangsschaltung (19) einerseits sowie den Verstärkerstufen (17) und der Auswahlschaltung (21) andererseits Schmitt-Trigger (24, 25 und 26, 27, 28, 29) mit unterschiedlichen Schaltschwellen vorgesehen sind und
daß die der Ausgangsschaltung (19) zugeordneten Schmitt-Trigger (24, 25) drehrichtungsabhängige, die der Auswahlschaltung (21) zugeordneten Schmitt-Trigger (26, 27, 28, 29) drehrichtungsunabhängige Signale liefern.

6. Drehzahlgeber nach Anspruch 5,
dadurch gekennzeichnet,
daß an den Eingängen der Auswahlschaltung (21) jeweils eine mit einem ODER-Glied (30, 31) verknüpfte Parallelschaltung (26, 27 bzw. 28, 29) eines invertierenden und eines nicht invertierenden Schmitt-Triggers vorgesehen ist.

7. Drehzahlgeber nach Anspruch 1,
dadurch gekennzeichnet,
daß die Hallgeneratoren (12, 13, 14, 15) und die Funktionselemente der Operationsverstärker (22, 23), der Formerstufen (18, 20), der Auswahlschaltung (21) und der Ausgangsschaltung (19) auf einem Substratkörper implantiert sind.

8. Drehzahlgeber nach Anspruch 1,
dadurch gekennzeichnet,
daß als Speicher (38) eine Flip-Flop-Stufe vorgesehen ist und die Ausgangsschaltung (19) zwei UND-Glieder (39, 40) umfaßt, von denen das eine (39) mit einem und das andere (40) mit dem anderen Ausgang der Flip-Flop-Stufe verknüpft ist.

9. Drehzahlgeber nach Anspruch 1,
dadurch gekennzeichnet,
daß der Ausgangsschaltung (19) ein weiteres UND-Glied (42) zugeordnet ist, welches den Ausgang des Drehzahlgebers erst dann freigibt, wenn eine die Ver- und Entriegelung des Speichers (38) steuernde Flip-Flop-Stufe (32) einen Speichervorgang quittiert hat.

10. Drehzahlgeber nach Anspruch 1,
dadurch gekennzeichnet,
daß ein Träger (48) vorgesehen ist, in welchem ein wenigstens die Hallgeneratoren (12, 13, 14, 15) enthaltendes Substratplättchen (50), ein Permanentmagnet (49) sowie Leitungen (51, 52), mit denen die Funktionselemente des Substratplättchens (50) kontaktiert sind, aufgenommen sind.

## Claims

1. A rotational speed sensor which recognises the direction of rotation comprising at least one permanent magnet and a plurality of magnetic-field-dependent elements preferably arranged in one and the same plane, which is actively connected to a ferromagnetic timing wheel connected to the object to be measured, characterised in that in an input circuit (16) two magnetic-field-dependent elements linked to an amplifier stage are assigned at least two further magnetic-field-dependent elements linked to a second amplifier stage in such manner that the shortest connecting lines between two respective magnetic-field-dependent elements linked to one and the same amplifier stage intersect, that the outputs of the amplifier stages (17) are linked via shaper stages (18, 20) to an output circuit (19) and to a selector circuit (21) consisting of a comparator (32, 33, 34, 35, 36, 37) and a memory (38) controlled by the latter, and that output- and selector circuits are designed such that the state of the memory (38) which occurs after the installation of the rotational speed sensor on the basis of the selection function of the comparator (32, 33, 34, 35, 36, 37) opens the output circuit (19) of the rotational speed sensor for the respective "better" signal of the two pairs of magnetic-field-dependent elements, i.e. for the forwarding of that signal of the pair having the longer signal duration, so that in respect of the directions of movement of the timing wheel, position-independent assembly at the site of installation is permitted.

2. A rotational speed sensor as claimed in Claim 1, characterised in that Hall generators are used as magnetic-field-dependent elements, that two respective Hall generators (12, 13 and 14, 15) are connected as differential generators and that each differential generator (12, 13 and 14, 15) is connected to an operational amplifier (22, 23) as differential amplifier.

3. A rotational speed sensor as claimed in Claim 1, characterised in that an annular magnet is used as permanent magnet and that the magnetic-field-dependent elements (12, 13, 14, 15) are arranged in the space within the annular magnet with minimal magnetic induction.

4. A rotational speed sensor as claimed in Claim 1, characterised in that the memory (38) is assigned a monitoring circuit (47) which in the event of a change in the level value at an output of the memory (38) releases the locking of the memory inputs effected by the switching procedure of the comparator (32, 33, 34, 35, 36, 37).

5. A rotational speed sensor as claimed in Claim 1, characterised in that for the shaper stages (18, 20) between the amplifier stages (17) and the output circuit (19) on the one hand and the amplifier stages (17) and the selector circuit (21) on the other hand, Schmitt triggers (24, 25 and 26, 27, 28, 29) with different switching thresholds are provided, and that the Schmitt triggers (24, 25) assigned to the output circuit (19) supply rotation-direction-dependent signals, while the Schmitt triggers (26, 27, 28, 29) assigned to the selector circuit (21) supply rotation-direction-independent signals.

6. A rotational speed sensor as claimed in Claim 5, characterised in that at the inputs of the selector circuit (21), a respective parallel arrangement (26, 27 and 28, 29), linked to an OR-element (30, 31), comprising an inverting Schmitt trigger and a non-inverting Schmitt trigger is provided.

7. A rotational speed sensor as claimed in Claim 1, characterised in that the Hall generators (12, 13, 14, 15) and the function elements of the operational amplifiers (22, 23), of the shaper stages (18, 20), of the selector circuit (21) and of the output circuit (19) are implanted on a substrate body.

8. A rotational speed sensor as claimed in Claim 1, characterised in that a flip-flop stage is provided as memory (38), and the output circuit (19) comprises two AND-elements (39, 40), of which one (39) is linked to one output of the flip-flop stage and the other (40) is linked to the other output thereof.

9. A rotational speed sensor as claimed in Claim 1, characterised in that the output circuit (19) is assigned a further AND-element (42) which releases the output of the rotational speed sensor only when a flip-flop stage (32), which controls the locking and unlocking of the memory (38), has acknowledged a store procedure.

10. A rotational speed sensor as claimed in Claim 1, characterised in that a carrier (48) is provided in which are accommodated a substrate plate (50), which contains the Hall generators (12, 13, 14, 15) at least, a permanent magnet (49), and lines (51, 52) with which the function elements of the substrate plate (50) are contacted.

## Revendications

1. Capteur de vitesse de rotation détectant le sens de rotation avec au moins un aimant permanent et plusieurs éléments assujettis au champ magnétique disposés, de préférence, dans un seul et même plan, qui coopère fonctionnellement avec une roue de synchronisation ferromagnétique reliée à l'objet de mesure,
caractérisé par le fait
que, dans un circuit d'entrée (16), à deux éléments assujettis au champ magnétique combinés avec un étage d'amplification sont associés au moins deux autres éléments assujettis au champ magnétique combinés avec un second étage d'amplification de telle sorte que les lignes de liaison les plus courtes se croisent entre respectivement deux éléments assujettis au champ magnétique combinés avec un seul et même étage d'amplification,
que les sorties des étages d'amplification (17) sont combinés, par l'intermédiaire d'étages de mise en forme (18, 20), avec un circuit de sortie (19) et avec un circuit de sélection (21) constitué d'un comparateur (32, 33, 34, 35, 36, 37) et d'une mémoire (38) commandée par ce dernier et que la configuration du circuit de sortie et de sélection est telle que l'état de la mémoire (38) s'établissant après le montage du capteur de vitesse de rotation en raison de la fonction de sélection du comparateur (32, 33, 34, 35, 36, 37) ouvre le circuit de sortie (19) du capteur de vitesse de rotation pour le signal respectivement "le meilleur" des deux paires d'éléments assujettis au champ magnétique, c'est-à-dire pour la transmission du signal de la paire avec une durée de signal plus longue, de sorte à permettre, en ce qui concerne les sens de mouvement de la roue de synchronisation au lieu d'implantation un montage indépendant de la position.

2. Capteur de vitesse de rotation selon la revendication 1, caractérisé par le fait
que les éléments assujettis au champ magnétique utilisés sont des générateurs à effet Hall,
que respectivement deux générateurs à effet Hall (12, 13 ou 14, 15) sont montés en transmetteur différentiel et que chaque transmetteur différentiel (12, 13 ou 14, 15) est relié à un amplificateur opérationnel (22, 23) comme amplificateur différentiel.

3. Capteur de vitesse de rotation selon la revendication 1, caractérisé par le fait
que l'aimant permanent utilisé est un aimant annulaire et que les éléments assujettis au champ magnétique (12, 13, 14, 15) sont disposés dans l'espace à induction magnétique minimale existant à l'intérieur dudit aimant annulaire.

4. Capteur de vitesse de rotation selon la revendication 1, caractérisé par le fait
qu'à la mémoire (38) est associé un circuit de surveillance (47) qui supprime, en cas de changement de la valeur de niveau à l'une des sorties de la mémoire (38), le verrouillages des entrées de mémoire provoqué par le processus de commutation du comparateur (32, 33, 34, 35, 36, 37).

5. Capteur de vitesse de rotation selon la revendication 1, caractérisé par le fait
que pour les étages de mise en forme (18, 20) entre les étages d'amplification (17) et le circuit de sortie (19), d'une part, ainsi qu'entre les étages d'amplification (17) et le circuit de sélection (21), d'autre part, sont prévues des bascules de Schmitt (24, 25 et 26, 27, 28, 29) avec des seuils de commutation différents et que les bascules de Schmitt (24, 25) associées au circuit de sortie (19) fournissent des signaux dépendants du sens de rotation et que les bascules de Schmitt (26, 27, 28, 29) associées au circuit de sélection (21) fournissent des signaux indépendants du sens de rotation.

6. Capteur de vitesse de rotation selon la revendication 5, caractérisé par le fait
qu'aux entrées du circuit de sélection (21) est prévu respectivement un montage en parallèle (26, 27 ou 28, 29) combiné avec un circuit OU (30, 31) d'une bascule de Schmitt invertissante et d'une bascule de Schmitt non invertissante.

7. Capteur de vitesse de rotation selon la revendication 1, caractérisé par le fait
que les générateurs à effet Hall (12, 13, 14, 15) et les éléments fonctionnels des amplificateurs opérationnels (22, 23), des étages de mise en forme (18, 20), du circuit de sélection (21) et du circuit de sortie (19) sont implantés sur un corps de substrat.

8. Capteur de vitesse de rotation selon la revendication 1, caractérisé par le fait
que comme mémoire (38) est prévu un étage flip-flop et que le circuit de sortie (19) englobe deux circuits ET (39, 40) dont l'un (39) est relié à l'une et l'autre (40) est relié à l'autre sortie de l'étage flip-flop.

9. Capteur de vitesse de rotation selon la revendication 1, caractérisé par le fait
qu'au circuit de sortie (19) est associé un autre circuit ET (42) qui ne débloque la sortie du capteur de vitesse de rotation que lorsqu'un étage flip-flop (32) commandant un verrouillage et déverrouillage de la mémoire (38) a accusé réception d'une procédure de mémorisation.

10. Capteur de vitesse de rotation selon la revendication 1, caractérisé par le fait
qu'il est prévu un support (48) dans lequel sont logés une plaquette de substrat (50) contenant au moins les générateurs à effet Hall (12, 13, 14, 15), un aimant permanent (49) ainsi que des lignes (51, 52) avec lesquelles sont contactés les éléments fonctionnels de la plaquette de substrat (50).
